# EUROPÄISCHE PATENTANMELDUNG

(11) **EP 1 058 283 A2**
(43) Veröffentlichungstag der Anmeldung: **06.12.2000**
(21) Anmeldenummer: 00890182.9
(22) Anmeldetag: 02.06.2000
(51) Int. Cl.: H01H 85/30, H01H 9/16

(54) **Überwachungssystem für Niederspannungsschaltgeräte**

(30) Priorität: 04.06.1999 AT 100099
(71) Anmelder: M. Schneider, Schaltgerätebau und Elektroinstallationen Gesellschaft m.b.H., 1160 Wien (AT)
(72) Erfinder: Portschy, Kurt, 1200 Wien (AT); Scheibenreiter, Peter, 1030 Wien (AT); Schweikhart, Martin, Dipl.-Ing., 2345 Brunn/Geb. (AT)
(74) Vertreter: Hehenberger, Reinhard, Dipl.-Ing.

(57) **Zusammenfassung**

Um bei Niederspannungsschaltgeräten mit möglichst geringem Aufwand, d.h. möglichst wenig Meßstellen und Verkabelung die Betriebsspannung möglichst umfassend und genau zu erfassen und auszuwerten, wird ein Überwachungssystem vorgeschlagen mit vor und nach Schutzorganen, z.B. Sicherungen (16), von zu überwachenden Phasen (R1-R2, S1-S2, T1-T2) vorgesehenen Meßstellen (17, 18, 19), mit einer Meß- und Auswerteeinheit, die mit den Meßstellen verbunden ist, und mit einer mit der Meß- und Auswerteinheit (2) verbundenen Steuereinheit, an der Informationen über die Netzart und/oder eine Auswahl von zu überwachenden Phasen (R1-R2, S1-S2, T1-T2) eingestellt werden können.

Dadurch, daß vor und nach jedem Schutzorgan einer zu überwachenden Phase eine Meßstelle vorgesehen ist, kann auf einfache Weise sowohl die Phasenspannung ihrer Höhe und ihrem Verlauf nach als auch die über dem Schutzorgan anliegende Differenzspannung erfaßt werden, wobei diese Art der Spannungserfassung unabhängig von der Einspeiserichtung ist.

## Beschreibung

Die Erfindung betrifft ein Überwachungssystem für Niederspannungsschaltgeräte mit integriertem Überlast- und Kurzschlußschutz, wie Leisten, Unterteile und Sicherungs-Lasttrennschalter und ein Verfahren zum Erfassen und Auswerten der Betriebsspannungen von zu überwachenden Phasen mit Schutzorganen, wie Sicherungen.

Typische Betriebsspannungen solcher Niederspannungsschaltgeräte sind in der Norm IEC 38 definiert. Insbesondere betrifft die Erfindung NH-Leisten, NH-Unterteile und NH-Sicherungs-Lasttrennschalter

Im Zuge der Überwachung von Niederspannungsschaltgeräten ist man bestrebt, mit möglichst geringem Aufwand, d.h. möglichst wenig Meßstellen und Verkabelung die Betriebsspannung möglichst umfassend und genau zu erfassen und auszuwerten, und zwar sowohl hinsichtlich laufender Betriebsparameter als auch des Ausfalls einer oder mehrerer Phasen oder einer Unterbrechung einer oder mehrerer Phasen durch einen Schaden im Netz, weshalb das Schutzorgan, z.B. die Sicherung, abschaltet.

Bei der vorliegenden Erfindung wird diese Aufgabe gelöst durch vor und nach Schutzorganen, z.B. Sicherungen, von zu überwachenden Phasen vorgesehene Meßstellen und eine Meß- und Auswerteeinheit, die mit den Meßstellen verbunden ist, und eine mit der Meß- und Auswerteeinheit verbundene Steuereinheit, an der Informationen über die Netzart und/oder eine Auswahl von zu überwachenden Phasen eingestellt werden können.

Dadurch, daß vor und nach jedem Schutzorgan einer zu überwachenden Phase eine Meßstelle vorgesehen ist, kann auf einfache Weise sowohl die Phasenspannung ihrer Höhe und ihrem Verlauf nach als auch die über dem Schutzorgan anliegende Differenzspannung erfaßt werden, wobei diese Art der Spannungserfassung unabhängig von der Einspeiserichtung ist. Bei z.B. einem Drehstromnetz genügen daher sechs Meßstellen, zwei für jede Phase, um eine Vielzahl von Leistungsdaten des Netzes sowie Informationen über den Ausfall einer oder mehrerer Phasen oder Abschalten einer oder mehrerer Schutzorgane zu erhalten.

Da es eine Vielzahl unterschiedlicher Netzarten gibt, soweit die Betriebsart, Stromart, Spannungsart und das Spannungsniveau betroffen sind, und z.B. bei mehrphasigen Systemen aus verschiedensten Gründen nicht immer alle Phasen überwacht werden sollen oder können, besteht das Bestreben, möglichst nur ein einziges Überwachungssystem zu schaffen, das auf einfache Weise an die jeweilige Netzart angepaßt werden kann bzw. eine einfache Auswahl bestimmter, zu überwachender Phasen eines mehrphasigen Netzes erlaubt.

Zur Lösung dieser Aufgabe bedient sich die Erfindung der Steuereinheit, an der Informationen über die Art des Spannungssystems und/oder die zu überwachenden Phasen eingestellt werden können.

Die eingangs gestellte Aufgabe wird des weiteren gelöst durch ein Verfahren zum Erfassen und Auswerten der Betriebsspannungen von zu überwachenden Phasen mit Schutzorganen, z.B. Sicherungen, das dadurch gekennzeichnet ist, daß die Betriebsspannung gegenüber Erde auf einer Seite des Schutzorganes und die Differenzspannung über dem Schutzorgan jeder zu überwachenden Phase erfaßt werden, daß diese Spannungen einer Meß- und Auswerteeinheit zugeführt werden, und daß diese gemessenen Ist-Werte der Spannungen und/oder von der Meß- und Auswerteeinheit daraus berechnete Werte in der Meß- und Auswerteeinheit mit Soll-Werten verglichen werden.

Mit diesem Verfahren kann auf einfache Weise sowohl die Phasenspannung ihrer Höhe und ihrem Verlauf nach als auch die über dem Schutzorgan, z.B. der Sicherung, anliegende Differenzspannung sehr genau erfaßt werden, wobei diese Art der Spannungserfassung wiederum unabhängig von der Einspeiserichtung ist.

Beim erfindungsgemäßen Verfahren ist ebenfalls bevorzugt, daß über eine Steuereinheit Informationen über die Art des Netzes und/oder eine Auswahl von zu überwachenden Phasen eingestellt werden können, da dies das Anpassen eines standardisierten Überwachungssystems an verschiedene Netzarten und eine einfache Auswahl bestimmter, zu überwachender Phasen eines mehrphasigen Netzes erlaubt.

In einer Ausführungsform der Erfindung ist vorgesehen, daß die Steuereinheit der Meß- und Auswerteeinheit zugeordnete Schalter aufweist. Idealerweise ist das System dabei so aufgebaut, daß jeder Phase ein Schalter zugeordnet ist. Geht man davon aus, daß üblicherweise nie mehr als drei Phasen zu überwachen sind, hat ein möglichst universell einsetzbares Überwachungssystem daher drei Schalter, wobei man, in Abhängigkeit von der Anzahl der vorhandenen oder zu überwachenden Phasen, den der jeweiligen Phase zugeordneten Schalter einschaltet.

Des weiteren kann ein Schalter für die Klassifizierung der Spannungsart vorgesehen ist, der beispielsweise eine Unterscheidung zwischen Drehstrom einerseits und Gleich- und Wechselstrom anderseits ermöglicht, so daß ein einheitliches Überwachungssystem bzw. -gerät auch für diese unterschiedlichen Spannungsarten eingesetzt werden kann.

In der Technik setzt es sich in zunehmendem Maße durch, Meßdaten oder Betriebsdaten von Geräten beliebiger Art über Bus-Systeme zu Schaltzentralen oder Zentralrechnern zu übermitteln, was auch bei den vom erfindungsgemäßen Überwachungssystem erfaßten bzw. ausgewerteten Daten möglich ist.

Alternativ kann daher vorgesehen sein, daß die Steuereinheit, z.B. ein Computer, über die Bus-Leitung mit der Meß- und Auswerteeinheit verbunden ist. Die Informationen bzw. Steuerparameter betreffend die Art des Spannungssystems und/oder die zu überwachenden Phasen werden bei dieser Ausführungsform in einer Steuerzentrale gesetzt, die über das Bus-System mit der Meß- und Auswerteelektronik verbunden ist.

Wenn zwei oder mehrere erfindungsgemäße Überwachungssysteme zu einem Bus-System zusammengeschlossen sind, ist es erforderlich, bei dem am Ende der Datenleitung angeordneten Überwachungssystem einen Endwiderstand vorzusehen. Um das einfache Zu- und Wegschalten dieses Endwiderstandes zu ermöglichen, kann in weiterer Folge vorgesehen sein, daß ein Schalter für einen Endwiderstand des Bus-Systems vorgesehen ist.

Um die Flexibilität des Überwachungssystems weiter zu erhöhen, kann vorgesehen sein, daß die Meß- und Auswerteeinheit gesondert spannungsversorgt ist und die Betriebsspannung der Phasen, gegebenenfalls über einen Spannungsteiler, gegenüber Erde der Meß- und Auswerteeinheit mißt und auswertet. Z.B. bei Drehstromnetzen kann es vorkommen, daß diese ohne Null- und/oder Schutzleiter geführt werden, so daß die Betriebsspannung gegenüber Erde nicht direkt gemessen werden könnte. Da bei dieser Ausführungsform der Erfindung die Betriebsspannungen gegenüber der Erde der Spannungsversorgung der Meß- und Auswerteeinheit gemessen werden, ist es bei einheitlichem Schaltungsaufbau immer möglich, die Betriebsspannungen direkt zu messen, unabhängig davon, ob das Drehstromnetz nun mit oder ohne Null- und/oder Schutzleiter geführt wird.

Um den ordnungsgemäßen Netzbetrieb bzw. den Ausfall von Phasen und/oder das Abschalten von Schutzorganen anzuzeigen, ist in Weiterbildung der Erfindung vorgesehen, daß der Meß- und Auswerteeinheit eine optische Anzeigevorrichtung zugeordnet ist.

Diese Anzeige kann eine Fernanzeige und/oder eine an einem Gehäuse der Meß- und Auswerteeinheit angeordnete Anzeigevorrichtung sein.

Bevorzugt ist, wenn die Anzeigevorrichtung eine der Anzahl der Phasen entsprechende, vorzugsweise drei, optische Signaleinrichtungen aufweist. Diese Signaleinrichtungen sind z.B. bei ordnungsgemäßem Betrieb nicht aktiv, wogegen bei Ausfall einer Phase und/oder Abschalten eines Schutzorganes die jeweilige Signaleinrichtung z.B. leuchtet oder blinkt.

Des weiteren kann vorgesehen sein, daß die Anzeigevorrichtung eine optische Signaleinrichtung für die Anzeige der Betriebsspannungsüberwachung aufweist, so daß auf einfache Weise zu erkennen ist, ob alle Betriebsspannungen des Netzes in Ordnung sind.

Schließlich kann zur weiteren Kontrolle, daß das Überwachungssystem ordnungsgemäß arbeitet, vorgesehen sein, daß die Anzeigevorrichtung eine optische Signaleinrichtung für die Spannungsversorgung der Meß- und Auswerteeinheit aufweist.

Bei Überwachungssystemen wie dem vorliegenden ist es problematisch, daß Teile des Überwachungssystems im Kleinspannungsbereich arbeiten, andere Teile hingegen im Niederspannungsbereich, so daß eine räumliche Nahebeziehung dieser im unterschiedlichen Spannungsbereich arbeitenden Teile vermieden werden soll bzw. muß. Bei der Erfindung wird dieses Problem dadurch gelöst, daß die im Kleinspannungsbereich arbeitenden Teile der Meß- und Auswerteeinheit an einer Platine im Gehäuse angeordnet ist und daß im Gehäuse eine weitere Platine vorgesehen ist, an der im Niederspannungsbereich arbeitende Bauteile des Überwachungssystems angeordnet sind.

Das erfindungsgemäße Verfahren zeichnet sich bevorzugt aus durch eine Initialisierungsphase und eine Betriebsphase, wobei in der Initialisierungsphase geprüft wird, ob die ermittelten Spannungen und/oder die daraus berechneten Werte einer von wenigstens zwei vorgegebenen Netzarten zugeordnet werden können, und wobei nach einer ordnungsgemäßen Zuordnung in der nachfolgenden Betriebsphase überwacht wird, ob die ermittelten Ist-Werte der Spannungen und/oder die daraus berechneten Werte von vorgegebenen Soll-Werten für die Netzart abweichen.

Dieses Verfahren weist den erheblichen Vorteil auf, daß das System einen logischen Vergleich der tatsächlichen Netzart mit den an der Steuereinheit eingestellten Informationen bzw. ausgewählten Phasen durchführen kann. So kann das Überwachungssystem in der Initialisierungsphase z.B. feststellen, daß ein Fehler vorliegt, wenn in einem Wechselstromnetz drei Schalter eingeschaltet sind, was nur bei einem Drehstromnetz der Fall sein darf, oder wenn z.B. bei einem Wechsel- oder Gleichstromnetz korrekterweise z.B. nur zwei Schalter eingeschaltet sind, die Zuordnung der Schalter zu den tatsächlich angeschlossenen Leitungen aber nicht stimmt.

Des weiteren kann in der Initialisierungsphase z.B. automatisch festgestellt werden, um welche Spannungsklasse des Netzes es sich handelt, so daß ein einheitliches Überwachungssystem für verschiedene Spannungsniveaus von Netzen zum Einsatz kommen kann, wobei gleichzeitig das Bedienungspersonal von entsprechenden Einstellarbeiten entbunden wird, wodurch auch eine Fehlerquelle entfällt.

Weitere Merkmale und Vorteile der Erfindung ergeben sich aus der nachfolgenden Beschreibung von Ausführungsbeispielen der Erfindung unter Bezugnahme auf die Zeichnungen.

Es zeigt: Fig. 1 eine Ausführungsform eines Sicherungs-Lasttrennschalters mit abgenommenem Gehäusedeckel und einem angebauten, erfindungsgemäßen Überwachungssystem, die Fig. 2a bis 2h verschiedene Netzsysteme, die mit dem erfindungsgemäß Überwachungssystem überwacht werden können, Fig. 3 das Gehäuse des Überwachungssystems im auseinandergezogenen Zustand, wobei auch die mit den elektrischen bzw. elektronischen Teilen bestückten Platinen des Überwachungssystems schematisch dargestellt sind, Fig. 4 eine Schrägansicht auf das Gehäuse von oben und Fig. 5 eine Schrägansicht auf das Gehäuse von unten.

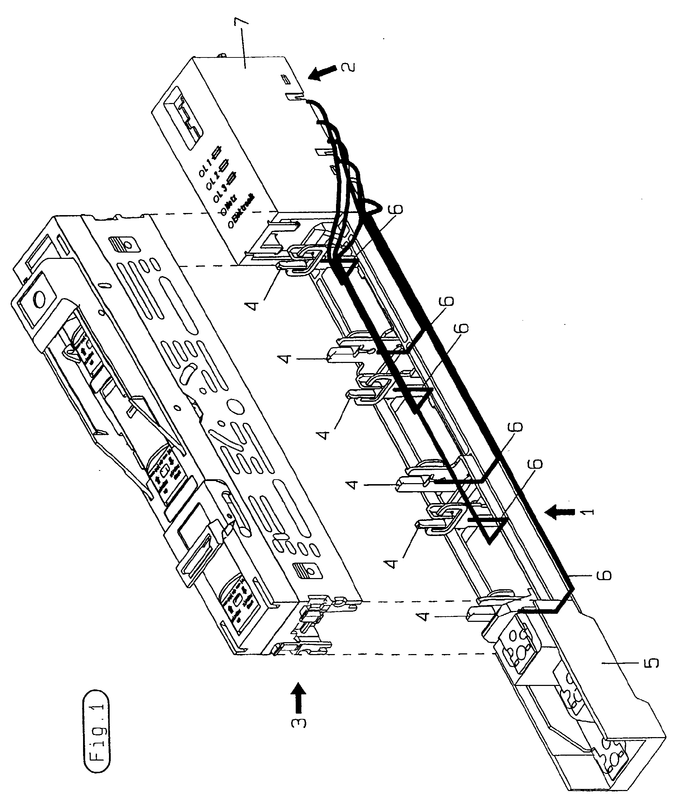

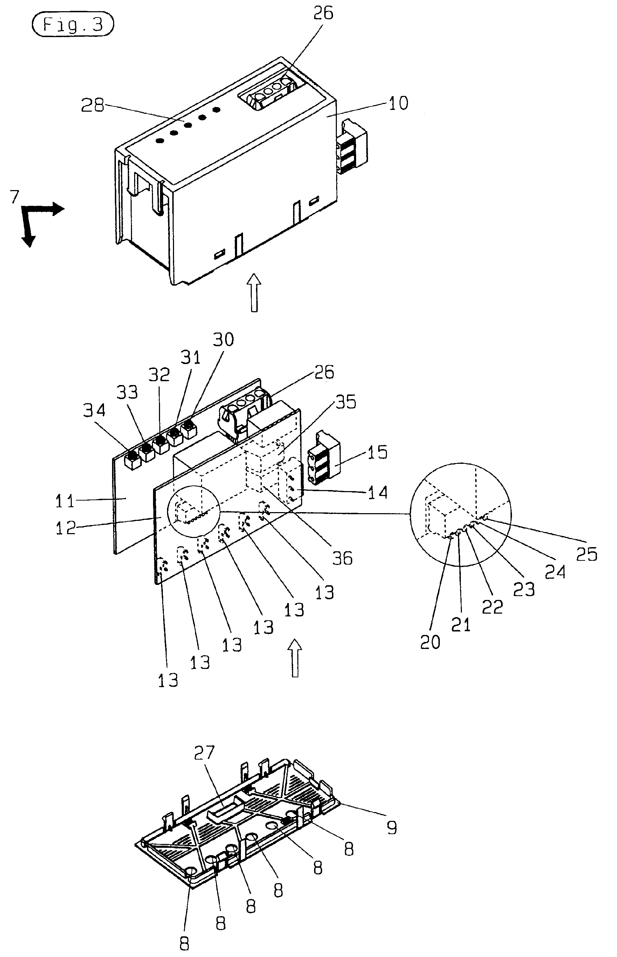

In Fig. 1 ist ein Sicherungs-Lasttrennschalter 1 dargestellt, an welchen ein erfindungsgemäßes Überwachungssystem 2 angeschlossen ist. Ein Gehäusedeckel und Berührungsschutz 3 des Sicherungs-Lasttrennschalters 1 ist im abgenommenen Zustand dargestellt, so daß Kontaktzungen 4 an einem Grundkörper 5 des Lasttrennschalters 1 zu erkennen sind. Von den Kontaktzungen 4 laufen insgesamt sechs Leitungen 6 zur Unterseite eines Gehäuses 7 des Überwachungssystems 2 und werden durch Löcher 8 im Boden 9 des Gehäuses 7 (Fig. 3) eingeführt.

Wie in Fig. 3 zu sehen ist, sind im Gehäuse 7, bestehend aus einem Gehäusedeckel 10 und dem Gehäuseboden 9, zwei Platinen 11, 12 aufgenommen, an welchen die elektrischen bzw. elektronischen Bauteile des Überwachungssystems angeordnet sind. Eine Trennung der Bauteile erfolgt dahingehend, daß im Kleinspannungsbereich arbeitende Bauteile an der Platine 11 und im Niederspannungsbereich arbeitende Bauteile an der Platine 12 angeordnet sind. Dementsprechend sind auch die Leitungen 6, die durch die Löcher 8 im Boden 9 geführt sind, über Verbinder 13 mit der Platine 12 verbunden.

Die Meß- und Auswerteeinheit, deren Teile an der Platine 11 angeordnet sind, weist eine eigene Stromversorgung auf. Der für die Stromversorgung der Meß- und Auswerteeinheit zugeordnete Steckerteil 14 ist ebenfalls an der Platine 12 angeordnet. Auch der netzseitige Steckerteil 15 ist in Fig. 3 symbolisch zu sehen. Alle im Niederspannungsbereich liegenden Meß- und Versorgungsspannungen werden durch Spannungsteiler oder andere geeignete Mittel auf der Platine 12 auf einen Kleinspannungs- bzw. Meßbereich abgesenkt, in dem die Meß- und Auswerteeinheit auf der Platine 11 arbeitet.

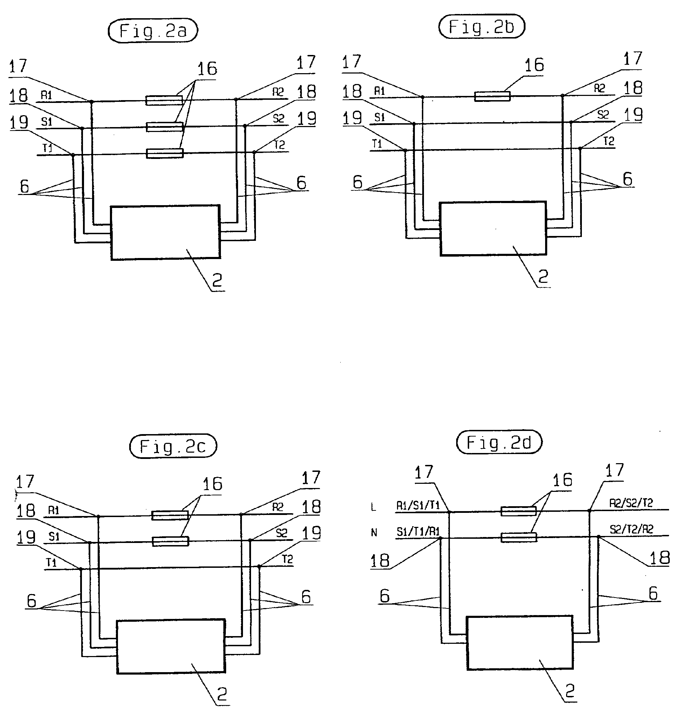

Wie bisher in Verbindung mit den angeschlossenen Zeichnungen beschrieben wurde, besteht bei diesem Ausführungsbeispiel die Möglichkeit, über sechs Leitungen 6 die Spannungen von drei Phasen an den Kontaktzungen 4 jeweils vor und nach einer Sicherung abzunehmen, die über einen Schwenkmechanismus im Gehäusedeckel 3 zwischen die einander paarweise zugeordneten Kontaktzungen 4 einsetzbar sind. Es kann somit z.B. ein Drehstromnetz ohne Null- und/oder Schutzleiter überwacht und ausgewertet werden. Ein derartiges Drehstromnetz ist symbolisch in Fig. 2a dargestellt, in dem drei Phasen R1-R2, S1-S2 und T1-T2 (am Gehäuseboden 9 in Fig. 5 mit L1-L1', L2-L2', L3-L3' bezeichnet) über Schmelzsicherungen 16 gesichert sind. An Meßpunkten 17, 18, 19 werden die Betriebsspannungen der drei Phasen vor und nach den Sicherungen 16 abgenommen und über die Leitungen 6 der Meß- und Auswerteeinheit zugeführt. Die Meßpunkte 17, 18, 19 entsprechen den Verbindungspunkten der Leitungen 6 mit den Kontaktzungen 4.

An den sechs Meßpunkten 17, 18, 19 können nun sowohl die Differenzspannungen über die einzelnen Sicherungen 16 als auch die Betriebsspannung "vor" und/oder "nach" den Sicherungen 16 abgenommen werden, wobei die Begriffe "vor" und "nach" den Sicherungen 16 willkürlich gewählt wurden, da das erfindungsgemäße Überwachungssystem unabhängig von der Einspeiserichtung arbeiten kann.

In den Fig. 2b und 2c sind wie in Fig. 2a Drehstromnetze dargestellt, wobei in Fig. 2b allerdings nur eine Phase R1-R2 mit einer Sicherung 16 ausgestattet ist und in Fig. 2c zwei Phasen R1-R2 und S1-S2 mit Sicherungen 16 ausgestattet sind.

Um das erfindungsgemäße Überwachungssystem 2 nicht nur für das in Fig. 2a dargestellte Drehstromnetz einsetzbar zu machen, sondern auch für die in den Fig. 2d bis 2h dargestellten Wechselstrom- und Gleichstromnetze, weist die Meß- und Auswerteeinheit Schalter 20 bis 25 (Fig. 3) auf. Dabei sind z.B. die Schalter 20 bis 22 den drei möglichen Phaseneingängen mit den jeweils zwei Meßleitungen 6 zugeordnet. Wenn alle drei Phasen überwacht werden sollen, dann sind alle drei Schalter 20, 21 und 22 einzuschalten. Sollen nicht alle Phasen überwacht werden, dann sind der oder die Schalter 20 bis 22, die der oder den nicht zu überwachenden Phasen zugeordnet sind, auszuschalten. Die einzelnen Schalter 20 bis 22 sind durch eine Öffnung 27 im Boden 9 des Gehäuses 7 der Meß- und Auswerteeinheit 2 zugänglich.

Durch die Möglichkeit, nicht zu überwachende Phasen bzw. Eingänge wegschalten zu können, bietet sich die Möglichkeit, das erfindungsgemäße Überwachungssystem auch für die in Fig. 2d bis 2h dargestellten Netzarten einzusetzen.

Bei Fig. 2d handelt es sich um ein Wechselstromnetz, bei dem sowohl die Phase L als auch der Nulleiter N über Sicherungen 16 gesichert sind und auch beide Leiter L, N überwacht werden sollen. Je nachdem, an welche der Klemmen 13 die Meßpunkte 17, 18 über die Leiter 6 angeschlossen sind, sind nur zwei der drei Schalter 20, 21 und 22 einzuschalten.

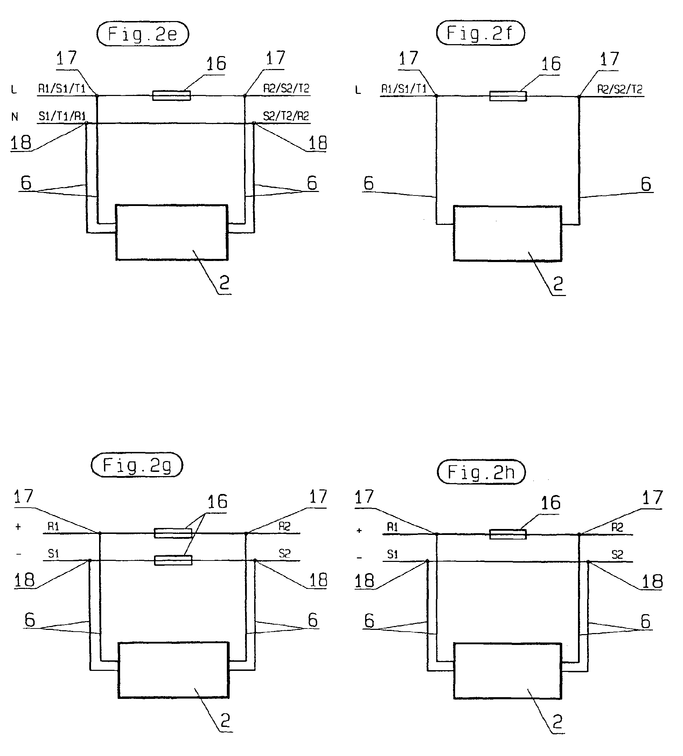

Entsprechendes gilt für das in Fig. 2e dargestellte Wechselstromnetz, bei dem nur die Phase L, nicht aber der Nulleiter N über eine Sicherung 16 gesichert ist.

Demgegenüber wird beim Wechselstromnetz gemäß Fig. 2f nur die Phase L gesichert und überwacht, so daß nur einer der drei Schalter 20 bis 22 einzuschalten ist.

Das zu den Wechselstromnetzen gemäß Fig. 2d und 2e Ausgeführte gilt sinngemäß zu den Gleichstromnetzen gemäß Fig. 2g und Fig. 2h, d.h., daß zwei der drei Schalter 20 bis 22 einzuschalten sind, um die beiden Gleichstromnetze zu überwachen. Aus Gründen der Klarheit wird darauf hingewiesen, daß für den Plus- und Minusleiter auch die Bezeichnung Phase verwendet wird.

Da das Drehstromnetz gemäß Fig. 2a ohne Null- und/oder Schutzleiter geführt wird, kann die Betriebsspannung gegenüber Erde nicht direkt gemessen werden. Um das erfindungsgemäße Überwachungssystem auch für derartige Fälle einsetzbar zu machen, wird die Betriebsspannung gegenüber Erde der Stromversorgung 14, 15 der Meß- und Auswerteeinheit gemessen. Diese Art der Betriebsspannungsmessung bietet den erheblichen Vorteil, daß ein einheitlicher Schaltungsaufbau des Überwachungssystems möglich ist, da natürlich die Betriebsspannung auch bei Drehstromnetzen mit Null- und/oder Schutzleiter gegenüber Erde der Stromversorgung der Meß- und Auswerteeinheit meßbar ist.

Entsprechendes gilt natürlich auch für die in den Fig. 2d bis 2h dargestellten Stromnetze, bei denen ebenfalls die Betriebsspannung gegenüber Erde der Stromversorgung der Meß- und Auswerteeinheit gemessen wird.

Bei den in den Fig. 2a, 2b und 2c dargestellten Drehstromnetzen erfolgt die Spannungserfassung derart, daß zunächst die Betriebsspannungen der einzelnen Phasen an Meßpunkten 17, 18, 19 auf einer Seite der Sicherungen gegenüber Erde erfaßt werden. Des weiteren werden die Differenzspannungen zwischen den beiden Meßpunkten 17, 18 und 19 jeder Phase erfaßt, wobei bei den Phasen, in denen keine Sicherungen 16 vorhanden sind, die Differenzspannung eben mit Null gemessen wird.

Die Meß- und Auswerteeinheit 2 berechnet dann aus den Betriebsspannungen der einzelnen Phasen die verketteten Spannungen, d.h. die Spannungsdifferenzen zwischen R1-S1, R1-T1 und S1-T1. Die verketteten Spannungen auf der anderen Seite der Sicherungen werden dann auf Grund der bereits berechneten, verketteten Spannungen auf der einen Seite der Sicherungen und der Differenzspannungen ΔR, ΔS und ΔT berechnet, d.h. R2 - S2 = R1 - S1 + ΔR - ΔS; R2 - T2 = R1 - T1 + ΔR - ΔT; S2 - T2 = S1 - T1 + ΔS - ΔT.

Soferne die Differenzspannung über einer Sicherung 16 von einem vorgegebenen Grenzwert abweicht, gibt das Überwachungssystem eine Fehlermeldung aus.

Bei den Drehstromnetzen gemäß Fig. 2b und Fig. 2c, bei welchen nicht alle Phasen Sicherungen aufweisen, erfolgt die Berechnung der verketteten Spannungen auf der zweiten Seite entsprechend, obwohl die Differenzspannungen ΔR, ΔS und ΔT zwischen den Meßpunkten 17, 18 und 19 unterschiedlich sind, je nachdem ob eine Sicherung oder unterschiedliche Sicherungen vorgesehen sind oder nicht.

Die laufende Überwachung der Spannungen, Phasenverschiebungen und dgl. mehr erfolgt dann anhand der verketteten Spannungen und der Differenzspannungen, die mit Soll-Werten laufend verglichen werden, wobei das Überwachungssystem eine Fehlermeldung abgibt, wenn ein Ist-Wert von dem jeweils vorgegebenen Soll-Wert unzulässig abweicht.

Bei den Wechsel- und Gleichstromnetzen gemäß Fig. 2d bis Fig. 2f erfolgt die Überwachung nicht auf Grund von verketteten Spannungen, sondern hier werden die Betriebsspannungen der einzelnen Phasen und die Differenzspannungen über die Sicherungen direkt herangezogen und mit Soll-Werten verglichen.

Durch den Umstand, daß je Phase bzw. Leiter zwei Meßpunkte - jeweils einer vor und nach der Sicherung 16, soweit vorhanden (Fig. 2b, 2c, 2e, 2h) - vorgesehen sind, und die Betriebsspannung gegenüber Erde der Stromversorgung der Meß- und Auswerteeinheit erfolgt, ist durch die höchstens sechs Meßpunkte 17, 18 und 19 eine umfassende Überwachung und Auswertung des angeschlossenen Netzes möglich, wobei neben verschiedensten Leistungsdaten des Netzes auf einfache Weise auch erfaßt werden kann, ob nun eine Sicherung 16 abgeschaltet hat oder eine Phase ganz ausgefallen ist.

Die einzige Einstellung, die der Kunde im dargestellten Ausführungsbeispiel vornehmen muß, ist das Ein- bzw. Ausschalten der drei Schalter 20, 21 und 22, um festzulegen, welche der drei Leiter bzw. Phasen überwacht werden sollen.

Um eine umfassendere Auswertung der Leistungsdaten des Netzsystems zu ermöglichen bzw. zu vereinfachen, ist beim dargestellten Ausführungsbeispiel ein weiterer Schalter 23 vorgesehen, an welchem der Benutzer einstellt, ob es sich um ein Drehstromnetz (Dreileiternetz) handelt oder um ein Gleichstrom- oder Wechselstromnetz. Diese Unterscheidung kann erforderlich sein, da der Benutzer ja auch nur eine oder zwei Betriebsphasen eines Drehstromnetzes durch entsprechendes Betätigen der Schalter 20 bis 22 zur Überwachung freigeben könnte. Die Unterscheidung, ob es sich um ein Gleichstromnetz oder um ein Wechselstromnetz handelt, kann wiederum von der Meß- und Auswerteeinheit selbst vorgenommen werden, indem gemessen wird, wie groß der Gleichstromanteil der einzelnen Phasen bzw. Leiter ist. Es kann für den Gleichstromanteil ein Schwellwert von z.B. 50 V vorgegeben werden, wobei die Meß- und Auswerteeinheit dann für ein Gleichstromnetz entscheidet, wenn der Gleichstromanteil einer Phase größer als dieser Schwellwert ist. Es versteht sich, daß dieser Schwellwert den jeweiligen Anforderungen entsprechend höher oder tiefer angesetzt werden kann. Des weiteren kann auch ein weiterer Schalter, z.B. der Schalter 24 vorgesehen sein, um eine weitere Unterscheidung zwischen Wechselstromnetz und Gleichstromnetz vorzugeben.

Die Meß- und Auswerteeinheit kann so ausgelegt sein, daß sie anhand der gemessenen Spannungen selbsttätig die Spannungsklasse des Netzes ermittelt und bei Über- oder Unterschreiten von vorgegebenen Grenzwerten der jeweiligen Spannungsklasse einen Fehler meldet. Die Meß- und Auswerteeinheit kann dabei so arbeiten, daß sie entweder zunächst alle an den Eingängen 13 anliegenden Spannungen mißt und dann anhand der ein- bzw. ausgeschalteten Schalter 20 bis 24 die jeweilige Spannungs- bzw. Netzklassifikation durchführt oder anhand der ein- bzw. ausgeschalteten Schalter 20 bis 22 nur jene an den Eingängen 13 anliegenden Spannungen mißt und auswertet, die durch die Schalter 20 bis 22 eingeschaltet sind.

Schließlich ist noch ein sechster Schalter 25 vorgesehen, der in Verbindung mit Bus-Systemen zum Einsatz kommen kann. Über ein derartiges Bus-System können im Rahmen der technischen Möglichkeiten beliebig viele Überwachungssysteme zusammengeschlossen und mit einem Datenverarbeitungssystem, z.B. einer Überwachungs- oder Meldezentrale verbunden werden. Da es bei derartigen Bus-Systemen erforderlich ist, daß die letzte im Bus-System angeordnete Einheit einen Endwiderstand aufweist, kann erfindungsgemäß ein derartiger, standardmäßig in der Meß- und Auswerteeinheit vorgesehener Endwiderstand über den Schalter 25 zu- oder weggeschaltet werden, so daß das erfindungsgemäße Überwachungssystem problemlos an den Anfang, in die Mitte oder an das Ende eines Bus-Systems geschaltet werden kann. Zum Anschluß des Bus-Systems sind am Deckel 10 des Gehäuses 7 neben dem Stecker 14 für die Stromversorgung der Meß- und Auswerteeinheit zwei an der Platine 11 angeordnete Stecker 35 und 36 vorgesehen.

Über ein derartiges Bus-System können die einzelnen Niederspannungsschaltgeräte auch mit einer Steuereinheit, z.B. einem Computer, verbunden sein. In diesem Fall können die Schalter 20 bis 24 an der Meß- und Auswerteeinheit 2 entfallen, da die entsprechenden Informationen über die Netzart und/oder die Auswahl von zu überwachenden Phasen über das Bus-System eingestellt werden können. Es ist natürlich möglich, auch bei einem angeschlossenen Bus-System die Schalter 20 bis 24 an der Meß- und Auswerteeinheit 2 zu belassen, da der Benutzer dann mit einem einheitlichen System selbst die Wahl hat, ob er die entsprechenden Parameter an den Schaltern oder über das Bus-System setzt. Es muß in diesem Fall natürlich dafür gesorgt sein, daß die an den Schaltern und über das Bus-System vorgenommenen Einstellungen nicht konkurrieren, indem man z.B. den Einstellungen über das Bus-System die Priorität gegenüber den Einstellungen an den Schaltern 20 bis 25 einräumt.

Wird das erfindungsgemäße Überwachungssystem in Betrieb genommen, dann versucht die Meß- und Auswerteeinheit in Verbindung mit den Einstellungen der Schalter 20 bis 24 in der Initialiserungsphase zunächst die Netzart und die Spannungsklasse zu erkennen. Wenn diese Erkennung erfolgreich durchgeführt wurde, wechselt der Betriebsmodus der Meß- und Auswerteeinheit in den Überwachungsmodus, in welchem ständig überprüft wird, ob sich die ermittelten Netz-Betriebsdaten und insbesondere die Betriebsspannungen bzw. verkettete Spannungen und Differenzspannungen der einzelnen überwachten Phasen innerhalb der für die jeweilige Spannungsklasse vorgegebenen Grenzwerte befinden. Überschreitet einer der ermittelten Istwerte den Grenzwert, gibt die Meß- und Auswerteeinheit eine Fehlermeldung aus.

Kann der Vorgang der Initialisierung nicht korrekt abgeschlossen werden, d.h. die Betriebsspannung bzw. verkettete Spannung und die Netzart anhand der eingeschalteten Schalter 20 bis 24 nicht korrekt einer bestimmten Klasse zugeordnet werden, wird dieser Vorgang nach Ablauf einer bestimmten Zeit wiederholt. Dabei ist es entweder möglich, diesen Vorgang beliebig oft zu wiederholen oder eine maximale Anzahl von Wiederholungen vorzugeben, nach der diese Initialisierungsphase endgültig abgebrochen wird.

Das Anzeigen des ordnungsgemäßen Betriebes oder von aufgetretenen Fehlern kann auf verschiedene Weise erfolgen.

Zum einen kann dies über das erwähnte Bus-System erfolgen.

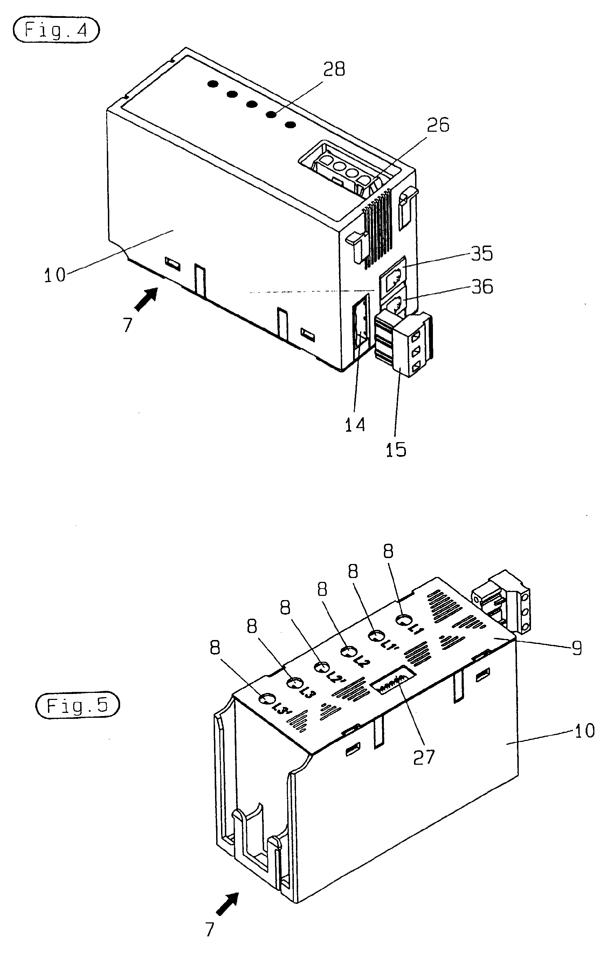

Zum anderen ist es möglich, eine Fernanzeige vorzusehen, die z.B. über ein in der Meß- und Auswerteeinheit vorgesehenes Relais aktiviert wird. In der einfachsten Form ist dieses Relais bei ordnungsgemäßem Betrieb abgefallen und wird, sobald irgendein Fehler auftritt, angezogen, so daß die Fernanzeige aktiviert wird. Es versteht sich, daß es bei dieser einfachsten Art der Fernanzeige nur möglich ist, irgendeinen Fehler grundsätzlich anzuzeigen, wobei die detaillierte Fehlersuche vor Ort zu erfolgen hat. Ein Stecker für eine derartige Fernanzeige mit Hilfe eines Relais ist in Fig. 3 und 4 mit 26 bezeichnet.

Die dritte beim erfindungsgemäßen Überwachungssystem vorgesehene Möglichkeit einer Fehleranzeige ist durch eine optische Anzeigeeinrichtung 28 am Deckel 10 des Gehäuses 7 vorgesehen und weist fünf optische Signaleinrichtungen 30 bis 34, vorzugsweise LED, auf, die an der Platine 11 angeordnet und an der Anzeigeeinrichtung 28 zu sehen sind. Dabei sind die LED 30, 31 und 32 den drei möglichen Phasen bzw. Leitungen zugeordnet und am Deckel mit L1, L2 und L3 bezeichnet. Solange sich das Netz ordnungsgemäß in Betrieb befindet, sind die LED 30, 31 und 32 nicht aktiv. Sobald ein Fehler auftritt, d.h. eine Sicherung 16 abschaltet, beginnt die zugeordnete LED 30, 31 oder 32, z.B. rot, zu blinken.

Eine vierte LED 33 ist vorgesehen, um anzuzeigen, daß an einer überwachten Phase eine korrekte Spannung anliegt. Sobald bei einer Phase vor oder nach der Sicherung ein Grenzwert unterschritten wird oder die Spannung völlig ab- bzw. ausfällt, beginnt die LED 33, z.B. gelb, zu leuchten und die der entsprechenden Phase zugeordnete LED 30, 31 oder 32 leuchtet rot.

Schließlich ist noch eine fünfte LED 34 vorgesehen, die bei ordnungsgemäßem Betrieb der Meß- und Auswerteschaltung grün leuchtet und bei einem Fehler erlischt oder blinkt.

Um anzuzeigen, daß das System die Betriebsspannungen in der Initialisierungsphase nicht einer bestimmten Klasse zuordnen konnte, können z.B. die den drei Phasen zugeordneten LED 30 bis 32 gegensinnig rot blinken. In der Initialisierungsphase leuchtet z.B. die LED 34 grün, die LED 33 blinkt gelb und die LED 30 bis 32 leuchten rot. Tritt ein Initialisierungsfehler auf, leuchtet z.B. die LED 34 grün, die LED 33 ist aus und die LED 30 bis 32 blinken gegensinnig.

Bei ordnungsgemäßem Betrieb leuchtet z.B. die LED 34 grün und die roten LED 30 bis 32 sowie die gelbe LED 33 sind aus.

In der Initialisierungsphase kann die Meß- und Auswerteeinheit z.B. folgende, logische Überprüfungen durchführen und bei einem der folgenden Fehler die Initialisierung abbrechen:
- alle Schalter 20 bis 24 sind auf "AUS";
- alle drei Schalter 20 bis 22 sind eingeschaltet, der Schalter 23 für Drehstrom aber nicht;
- nur der Schalter 23 ist eingeschaltet, aber keiner der Schalter 20 bis 22;
- es handelt sich um ein Drehstromnetz und es sind nicht alle verketteten Spannungen vorhanden und/oder im zulässigen Bereich für die jeweilige Spannungsklasse;
- es handelt sich um ein Gleich- oder Wechselstromnetz und es sind nicht alle Betriebsspannungen vorhanden und/oder im zulässigen Bereich für die jeweilige Spannungsklasse.

## Patentansprüche

1. Überwachungssystem für Niederspannungsschaltgeräte, gekennzeichnet durch vor und nach Schutzorganen, z.B. Sicherungen (16), von zu überwachenden Phasen (R1-R2, S1-S2, T1-T2) vorgesehene Meßstellen (17, 18, 19) und eine Meß- und Auswerteeinheit (2), die mit den Meßstellen (17, 18, 19) verbunden ist, und eine mit der Meß- und Auswerteeinheit (2) verbundene Steuereinheit, an der Informationen über die Netzart und gegebenenfalls eine Auswahl von zu überwachenden Phasen (R1-R2, S1-S2, T1-T2) eingestellt werden können.

2. Überwachungssystem nach Anspruch 1, dadurch gekennzeichnet, daß die Steuereinheit der Meß- und Auswerteeinheit (2) zugeordnete Schalter (20 bis 25) aufweist.

3. Überwachungssystem nach Anspruch 1 oder 2, dadurch gekennzeichnet, daß jeder Phase (R1-R2, S1-S2, T1-T2) ein Schalter (20 bis 22) zugeordnet ist.

4. Überwachungssystem nach einem der Ansprüche 1 bis 3, dadurch gekennzeichnet, daß ein Schalter (23) für die Klassifizierung des Spannungssystems vorgesehen ist.

5. Überwachungssystem nach einem der Ansprüche 1 bis 4, dadurch gekennzeichnet, daß die Meß- und Auswerteeinheit (2) über eine Bus-Leitung mit einem Datenverarbeitungssystem, z.B. einem Computer, verbunden ist.

6. Überwachungssystem nach einem der Ansprüche 1 bis 4, dadurch gekennzeichnet, daß ein Schalter (25) für einen Endwiderstand des Bus-Systems vorgesehen ist.

7. Überwachungssystem nach Anspruch 5 oder 6, dadurch gekennzeichnet, daß die Steuereinheit, z.B. ein Computer, über die Bus-Leitung mit der Meß- und Auswerteeinheit (2) verbunden ist.

8. Überwachungssystem nach einem der Ansprüche 1 bis 7, dadurch gekennzeichnet, daß die Schalter (20 bis 25) an einer Öffnung (27) in einem Gehäuse (7) der Meß- und Auswerteeinheit (2) angeordnet sind.

9. Überwachungssystem nach einem der Ansprüche 1 bis 8, dadurch gekennzeichnet, daß die Meß- und Auswerteeinheit (2) eine gesonderte Spannungsversorgung (14, 15) aufweist.

10. Überwachungssystem nach einem der Ansprüche 1 bis 9, dadurch gekennzeichnet, daß der Meß- und Auswerteeinheit (2) eine optische Anzeigevorrichtung (27) zugeordnet ist.

11. Überwachungssystem nach Anspruch 10, dadurch gekennzeichnet, daß die Anzeigevorrichtung (28) am Gehäuse (7) der Meß- und Auswerteeinheit angeordnet ist.

12. Überwachungssystem nach Anspruch 10 oder 11, dadurch gekennzeichnet, daß die Anzeigevorrichtung (28) eine der Anzahl der Phasen entsprechende, vorzugsweise drei optische, Signaleinrichtungen (30, 31, 32) aufweist.

13. Überwachungssystem nach einem der Ansprüche 10 bis 12, dadurch gekennzeichnet, daß die Anzeigevorrichtung (28) eine optische Signaleinrichtung (33) für die Betriebsanzeige der Netz- bzw. Spannungsüberwachung aufweist.

14. Überwachungssystem nach einem der Ansprüche 9 und 10 bis 13, dadurch gekennzeichnet, daß die Anzeigevorrichtung (28) eine optische Signaleinrichtung (34) für die Spannungsversorgung der Meß- und Auswerteeinheit aufweist.

15. Überwachungssystem nach einem der Ansprüche 1 bis 14, dadurch gekennzeichnet, daß die Meß- und Auswerteeinheit (2) in einem Gehäuse (7) angeordnet ist, das an das Gehäuse (3, 5) eines Sicherungsystems anschließbar ist.

16. Überwachungssystem nach Anspruch 15, dadurch gekennzeichnet, daß die im Kleinspannungsbereich arbeitenden Teile der Meß- und Auswerteeinheit an einer Platine (11) im Gehäuse angeordnet sind und daß im Gehäuse (7) eine weitere Platine (12) vorgesehen ist, an der im Niederspannungsbereich arbeitende Bauteile des Überwachungssystems angeordnet sind.

17. Verfahren zum Erfassen und Auswerten der Betriebsspannungen von zu überwachenden Phasen von Niederspannungsschaltgeräten mit Schutzorganen, z.B. Sicherungen, dadurch gekennzeichnet, daß die Betriebsspannung gegenüber Erde auf einer Seite des Schutzorganes und die Differenzspannung über dem Schutzorgan jeder zu überwachenden Phase erfaßt werden, daß diese Spannungen einer Meß- und Auswerteeinheit zugeführt werden, und daß diese gemessenen Ist-Werte der Spannungen und/oder von der Meß- und Auswerteeinheit daraus berechnete Werte in der Meß- und Auswerteeinheit mit Soll-Werten verglichen werden.

18. Verfahren nach Anspruch 17, dadurch gekennzeichnet, daß die Betriebsspannung der Phasen, gegebenenfalls über einen Spannungsteiler, gegenüber Erde einer gesonderten Spannungsversorgung der Meß- und Auswerteeinheit gemessen wird.

19. Verfahren nach Anspruch 17 oder 18, dadurch gekennzeichnet, daß die Meß- und Auswerteeinheit bei einem Abweichen der Ist-Werte von den Soll-Werten eine Fehlermeldung abgibt.

20. Verfahren nach Anspruch 17 oder 19, dadurch gekennzeichnet, daß der Meß- und Auswerteeinheit Daten von wenigstens zwei, vorzugsweise sechs, Meßstellen zugeführt werden.

21. Verfahren nach einem der Ansprüche 17 bis 20, dadurch gekennzeichnet, daß über eine Steuereinheit Informationen über die Art des Netzes und/oder eine Auswahl von zu überwachenden Phasen eingestellt werden können.

22. Verfahren nach Anspruch 21, dadurch gekennzeichnet, daß der Meß- und Auswerteeinheit nur die Spannungen jener Phasen zugeführt werden, die an der Steuereinheit ausgewählt wurden.

23. Verfahren nach Anspruch 21, dadurch gekennzeichnet, daß der Meß- und Auswerteeinheit alle erfaßten Spannungen zugeführt, aber nur die Spannungen jener Phasen ausgewertet werden, die an der Steuereinheit ausgewählt wurden.

24. Verfahren nach einem der Ansprüche 17 bis 22, dadurch gekennzeichnet, daß in einem Drehstromnetz anhand der erfaßten Betriebsspannungen, gegebenenfalls nur der ausgewählten Phasen, die verketteten Spannungen auf eine Seite des Schutzorganes berechnet werden, und daß die verketteten Spannungen auf der anderen Seite der Sicherungen auf Grund der berechneten, verketteten Spannungen und der erfaßten Differenzspannungen berechnet werden.

25. Verfahren nach einem der Ansprüche 17 bis 24, gekennzeichnet durch eine Initialisierungsphase und eine Betriebsphase, wobei in der Initialisierungsphase geprüft wird, ob die ermittelten Spannungen und/oder die daraus berechneten Werte einer von wenigstens zwei vorgegebenen Netzarten zugeordnet werden können, und wobei nach einer ordnungsgemäßen Zuordnung in der nachfolgenden Betriebsphase überwacht wird, ob die ermittelten Ist-Werte der Spannungen und/oder die daraus berechneten Werte von vorgegebenen Soll-Werten für die Netzart abweichen.

26. Verfahren nach Anspruch 25, dadurch gekennzeichnet, daß die Meß- und Auswerteeinheit bei nicht ordnungsgemäß abgeschlossener Initialisierungsphase eine Fehlermeldung abgibt.

27. Verfahren nach einem der Ansprüche 17 bis 26, dadurch gekennzeichnet, daß während der Initialisierungsphase der Gleichstromanteil der zu überwachenden Phasen ermittelt wird und, wenn der Gleich-stromanteil einer Phase über einem vorgegebenen Schwellwert liegt, die Meß- und Auswerteeinheit das Netz als Gleichstromnetz klassifiziert.
